# EUROPÄISCHE PATENTANMELDUNG

(11) **EP 1 255 388 A2**
(43) Veröffentlichungstag der Anmeldung: **06.11.2002**
(21) Anmeldenummer: 02002511.0
(22) Anmeldetag: 02.02.2002
(51) Int. Cl.: H04L 25/02, H04L 5/14

(54) **Verfahren zur zentralen Datenraten-Einstellung in einer Datenübertragungsanlage sowie Vorrichtung zur zentralen Datenraten-Einstellung**

(30) Priorität: 05.05.2001 DE 10121912
(71) Anmelder: Phoenix Contact GmbH & Co. KG, 32825 Blomberg (DE)
(72) Erfinder: Schönherr, Dietmar, Dipl.-Ing., 32657 Lemgo (DE)

(57) **Zusammenfassung**

Beim erfindungsgemäßen Verfahren zur zentralen Einstellung der Datenrate in einer Datenübertragungsanlage wird die Datenrate auf den Teilnehmern anhand der von der Zentralstation ausgesendeten Datenraten-Einstellungstelegramme erkannt und eingestellt. Die Teilnehmer enthalten neben der Schnittstelle zur peripheren Anwendung einen Protokollkern und die erfindungsgemäßen Vorrichtungen zur Datenratenerkennung und Daterateneinstellung. Die Datenratenerkennung wird mit einer Telegrammerkennung gelöst, wobei für jede Datenrate je eine Datenraten-Detektor vorgesehen ist und die übertragenen Telegramme in der zeitlichen Phase der Datenraten-Einstellung für jeder der in Frage kommenden Datenraten den gleichen Inhalt aufweisen.

## Beschreibung

Die Erfindung betrifft ein Verfahren zur zentralen Datenraten-Einstellung in einer Datenübertragungsanlage nach dem Oberbegriff des Patentanspruchs 1, sowie die dazugehörige Vorrichtung zur zentralen Datenraten-Einstellung nach dem Oberbegriff des Patentanspruchs 10 in einer Datenübertragungsanlage.

### Stand der Technik

In einer bekannten in DE 299 08 608 U1 beschriebenen Datenübertragungsanlage wird die Datenrate für die Datenübertragung mit Hilfe von Sondertelegrammen eingestellt. Hierbei sind in der Phase der Datenrateneinstellung alle Empfänger auf eine Datenrate voreingestellt und damit bereit, Sondertelegramme zu empfangen und auszuwerten. Anhand des Sondertelegramms zur Datenraten-Einstellung wird die Datenrate für die zukünftige Datenübertragung eingestellt. Das Sondertelegramm enthält inhaltlich die Information der Datenrate. Es wird zum Zwecke der Datenrateneinstellung stets mit einer einzigen voreingestellten Datenrate übertragen. Die Datenrateneinstellung in dieser beschriebenen Art und Weise hat jedoch den entscheidenden Nachteil, daß bei zentraler Datenraten-Einstellung die Zentralstation Sondertelegramme aussenden muß. Eine Kompatibilität zu Teilnehmern ohne Datenraten-Einstellung läßt diese Datenübertragungsanlage nicht zu, da die Datenübertragung nur dann gewährleistet ist, wenn alle Teilnehmer das Sondertelegramm auswerten können.

Aus DE 44 18 622 C2 ist ein Verfahren zur Bestimmung der Übertragungsrate in einem Bussystem bekannt, bei welchem durch Bitlängenmessung aus einer Tabelle die der Bitlänge entsprechende Übertragungsrate ausgewählt wird. In diesem beschriebenen Verfahren wird zu Beginn der Bitflankenerkennung ein Zähler gestartet, der nach der nächsten Bitflanke wieder gestoppt wird. Der ermittelte Zählerwert repräsentiert eine Bitlänge, welche einer Datenrate entspricht. Der Zählwert wird mit einer vorgegebenen Tabelle von Soll-Bitlängen verglichen. Bei Übereinstimmung mit einem Wert aus der Tabelle wird danach die Datenrate eingestellt. Das hier vorgestellte Verfahren ist für Datenübertragungsanlagen sehr unzuverlässig, da Signalflanken auf Datenleitungen durch beispielsweise elektromagnetische Störeinwirkung erzeugt werden können. Mit dieser Meßmethode ist daher in elektromagnetisch rauher Industrieumgebung keine zuverlässige Datenraten-Einstellung möglich. Da der Zähler zur Bitlängenmessung einen Wert liefert, der auch mit vorgegebenen Abweichungen auf eine Datenrate korrespondiert, ist dieser in der Realisierung recht aufwendig und muss mit einem höheren Systemtakt getaktet werden. Andernfalls wird die Messung bei höheren Datenraten aufgrund des systematischen Abtastfehlers sehr ungenau.
In INTERBUS Grundlagen und Praxis, ISBN 3-7785-2471, 1998 ist ein Serielles Datenübertragungsprotokoll nach dem INTERBUS-Übertragungsverfahren beschrieben. Die Synchronisierung der Telegramme und die Funktion der Statustelegramme ist hier beschrieben. Hier wird stets von einer festen Datenrate ausgegangen, welche an allen Teilnehmern fest voreingestellt sein muss. In dem hier beschriebenen Datenübertragungsverfahren ist es nicht vorgesehen, dass die Datenrate zentral für alle Teilnehmer eingestellt oder verändert werden kann.

### Aufgabenstellung

Der Erfindung liegt die Aufgabe zugrunde, eine Datenübertragungsanlage zu realisieren, welche in den Teilnehmern eine durch die Zentralstation vorgegebene Datenrate einstellen läßt. Um die Phase der Datenraten-Einstellung in der gesamten Datenübertragungsanlage möglichst kurz zu halten, ist eine frühzeitige Weiterleitung der Datenraten-Einstellungstelegramme von einem Teilnehmer zum in der Datenrichtung nächst liegenden Teilnehmer notwendig. In bestehenden Datenübertragungsanlagen ohne zentral einstellbare Datenrate müssen Teilnehmer mit einstellbarer Datenrate ankoppelbar und betreibbar sein, wobei die Teilnehmer sich selbständig auf die feste Datenrate einstellen.

### Lösung der Aufgabe

Die Aufgabe wird erfindungsgemäß durch die im Anspruch 1 aufgeführten Merkmale und der vorgeschlagenen Vorrichtung nach Patentanspruch 10 gelöst.
Beim erfindungsgemäßen Verfahren wird in einer Datenübertagungsanlage von einer Zentralstation ausgehend vor Beginn der Datenübertragung die Datenrate auf den angekoppelten Teilnehmern eingestellt. Die Datenübertragungsanlage besteht aus einer Zentralstation, welche Ausgabedaten an die am Bus angeschlossenen Teilnehmern überträgt und in umgekehrter Richtung Eingabedaten von den Teilnehmern empfängt. Die Teilnehmer enthalten neben der Schnittstelle zur peripheren Anwendung einen Protokollkern und Vorrichtungen zur Datenratenerkennung und Datenrateneinstellung. Beim erfindungsgemäßen Verfahren wird die Datenratenerkennung wird mit einer Telegrammerkennung gelöst, wobei zur Erkennung der Datenrate für jede Datenrate je eine Datenraten-Detektor vorgesehen ist. In jedem Datenraten-Detektor ist die Telegrammerkennung implementiert, wobei nicht eine bestimmte Bitfolge zur Telegrammerkennung führt, sondern ein signifikantes Muster. Dieses Muster kann mehrere Telegrammarten repräsentieren. Beim vorliegenden Verfahren erfolgt eine Regenerierung der Telegramme zur Stabilisierung der Bitlänge während der Datenraten-Einstellung in jedem der Datenraten-Detektoren. Beispielsweise werden bei einer Datenübertragungsanlage nach dem INTERBUS-Protokoll Statustelegramme anhand signifikanter Bits im Telegramm und der Pause von mehreren Bitlängen zwischen zwei Statustelegrammen bestimmt. Beim erfindungsgemäßen Verfahren kann nach Erkennen eines einzigen Statustelegramms und der dazugehörigen Pause zuverlässig die Datenrate bestimmt werden. Der besondere Vorteil der vorliegenden Erfindung liegt darin, daß ein bestehendes Protokoll, wie beispielsweise das des INTERBUS, nicht verändert werden muss. Die jetzigen Telegrammuster und zeitlichen Abläufe beim Start der Datenübertragung können auch für die Datenraten-Einstellung benutzt werden. Hierbei ist es möglich, die bereits verwendeten Statustelegramme zur Aufhebung des Resets, was in INTERBUS Grundlagen und Praxis, ISBN 3-7785-2471 1998 beschrieben ist, für die Einstellung der Datenrate zu benutzen. Eine Protokolländerung oder ein neu definiertes Datenraten-Einstellungstelegramme ist hierfür nicht notwendig.

Im folgenden wird die Erfindung anhand eines Ausführungsbeispiels und den dazugehörigen Figuren beschrieben.

### Überschrift der Figuren

Fig. 1: zeigt eine beispielhafte Anordnung der Zentralstation und die am Bus angeschlossenen Teilnehmer im erfindungsgemäßen Anwendungsfall.

Fig. 2: zeigt schematisch die Vorrichtung mit den einzelnen Blöcken in einem Teilnehmer, welche zum Busbetrieb und der erfindungsgemäßen Datenraten-Einstellung notwendig sind.

Fig. 3: zeigt die zeitlichen Phasen beim Start der Datenübertragung.

Fig. 4: zeigt im Timing-Diagramm schematisch die Signalsequenzen auf den Datenleitungen in den einzelnen zeitlichen Phasen.

Fig. 5: zeigt im Timing-Diagramm schematisch die Signalsequenzen auf den Datenleitungen für die Phase der Datenraten-Einstellung.

Fig. 6: zeigt schematisch eine Variante einer Vorrichtung mit den einzelnen Blöcken in einem Teilnehmer, welche zum Busbetrieb und der erfindungsgemäßen Datenraten-Einstellung notwendig sind, wobei die Datenrate fest voreingestellt werden kann.

### Bezugszeichenliste

- 1:: Zentralstation, Busmaster
- 2:: Teilnehmer 1, Busmodul 1
- 3:: Teilnehmer 2, Busmodul 2
- 4:: Teilnehmer 3, Busmodul 3
- 5:: Busleitung, Datenhinweg Segment-1
- 6:: Busleitung, Datenhinweg Segment-2
- 7:: Busleitung, Datenhinweg Segment-3
- 8:: Busleitung, Datenrückweg

- 20:: Rücksetzsignal für den Protokollkern
- 21:: Daten-Ausgang des Protokollkerns
- 22:: Daten-Eingang
- 23:: Daten-Ausgang
- 24:: Dekoder zur voreinstellbaren Datenrate
- 25:: Signal zur Gültigkeit der Datenrate BD1
- 26:: Signal zur Gültigkeit der Datenrate BD2
- 27:: Signal zur Gültigkeit der Datenrate BD3
- 28:: interne Datenleitung
- 29:: Applikations-Daten
- 30:: Datenratenkennung
- 31:: Protokollkern
- 32:: Datenraten-Detektor für Datenrate BD1
- 33:: Datenraten-Detektor für Datenrate BD2
- 34:: Datenraten-Detektor für Datenrate BD3
- 35:: Datenraten-Controler
- 36:: Datenleitung-Eingangs-Auswahlschalter
- 37:: Datenleitung-Ausgangs-Umschalter
- 38:: Applikationsschnittstelle
- 39:: Anzeigesignal der eingestellten Datenrate
- 41:: Phase Reset
- 42:: Phase Datenraten-Einstellung
- 43:: Phase Umschalten auf Protokollkern
- 44:: Phase Protokollkern aktivieren
- 45:: Phase Busbetrieb, Datenübertragung

- 51:: signifikante Bitfolge
- 52:: signifikante Ruhezeit
- 53:: Datenraten-Einstellungstelegramm

### Ausführungsbeispiel

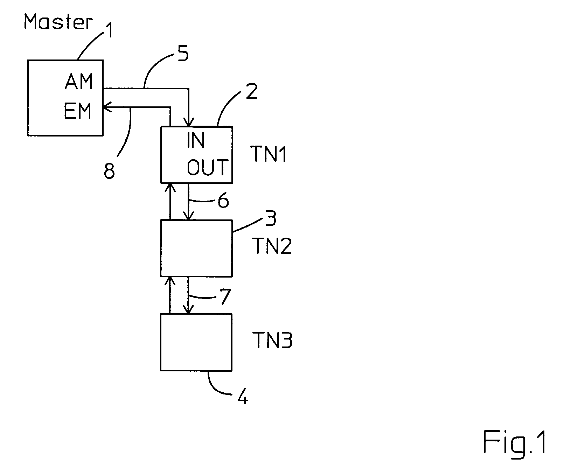

In **FIG. 1** ist beispielhaft die Anordnung einer Datenübertragungsanlage mit Zentralstation **1** und mehreren hintereinander liegenden Teilnehmern **2, 3, 4** mit den datenverbindenden Busleitungen **5, 6, 7, 8** dargestellt.

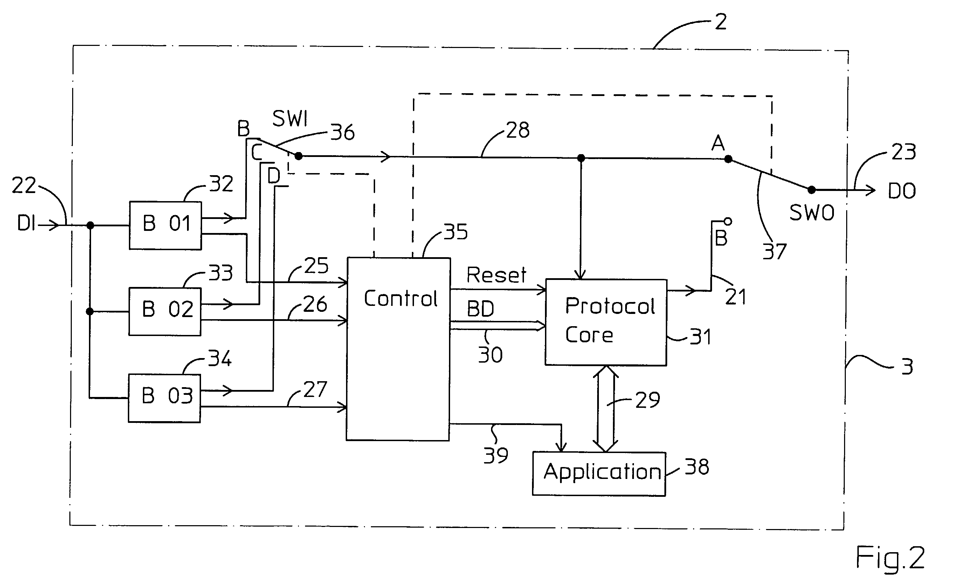

**FIG. 2** zeigt die notwendigen funktionalen Einrichtungen innerhalb eines Teilnehmers **2,** welche zur Erkennung der Datenrate der am Daten-Eingang **22** empfangenen Datenraten-Einstellungstelegrammen und zur Einstellung der Datenrate für den Protokollkern **31** notwendig sind. Der Datenraten-Detektor **32** für die Datenrate BD1 ist beispielsweise für die Erkennung der Datenrate von 500 Kbit/s vorgesehen, der Datenraten-Detektor **33** für die Datenrate BD2 für 2 Mbit/s, der Datenraten-Detektor **34** für die Datenrate BD3 für 8 Mbit/s. Während der Datenrateneinstellung sind alle Datenratendetektoren **32, 33, 34** gleichzeitig aktiv, und empfangen Telegramme über den Daten-Eingang **22.** Nach Erkennung eines gültigen Telegramms wird das Signal zur Gültigkeit der Datenrate BD1 **25** oder BD2 **26** oder BD3 **27** aktiviert. Im Regelfall kann nur ein Datenraten-Detektor eine einzige gültige Datenrate erkennen, so daß auch nur ein einziges Signal zur Gültigkeit der Datenrate aktiv am Datenraten-Controller **35** anliegen kann. Sobald der Datenraten-Controller **35** ein aktives Signal zur Gültigkeit einer Datenrate **25, 26** oder **27** erkannt hat, schaltet dieser den Datenleitungs-Eingangs-Auswahlschalter **36** auf die Position **B, C** oder **D,** um den Datenraten-Detektor mit der erkannten Datenrate auszuwählen. Damit wird über die interne Datenleitung **28** und dem Datenleitung-Ausgangs-Auswahlschalter **37** in der Position **A** eine bypassartige Verbindung durch den Teilnehmer **2** hindurch hergestellt, so daß das nachgeschaltete Anschaltmodul **3** ebenfalls mit der Datenraten-Einstellung beginnen kann und so weiter. Um eine stabile Datenrate einzustellen, fixiert der Datenraten-Controler **35** die Datenrate BD erst nach einer festgelegten Anzahl erkannter Telegramme oder nach einem festgelegten Zeitablauf. In der Phase der Datenraten-Einstellung aktiviert der Datenraten-Controler **35** ein Rücksetzsignal **20** zum Protokollkern **31.** Nach Erkennung der gültigen Datenrate und Weitergabe der Datenratenkennung **30** an den Protokollkern **31** wird das Rücksetzsignal **20** inaktiviert und der Datenleitung-Ausgangs-Umschalter **37** auf den Daten-Ausgang des Protokollkerns **21** umgeschaltet. Danach beginnt der Protokollkern **31** mit Protokollauswertung und ist für die Datenübertragung bereit. Die Applikationsschnittstelle **38** bildet die Verbindung zwischen der äußeren Anwendung und dem Protokollkern. Zusätzlich wird dort die Information der eingestellten Datenrate **39** der Applikationsschnittstelle **38** zur Verfügung gestellt.

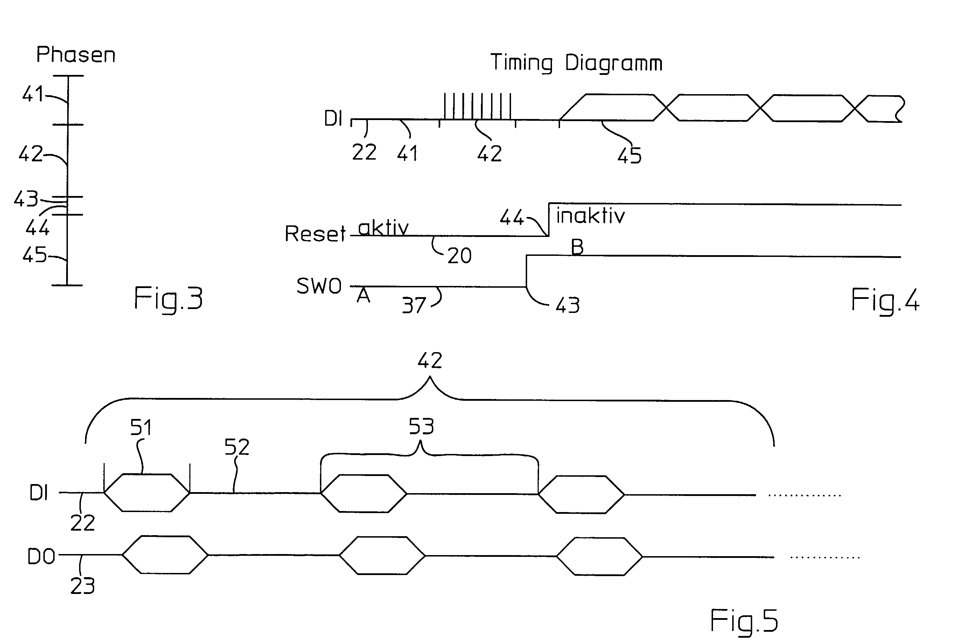

In **FIG. 3** ist das erfindungsgemäße Verfahren beispielhaft für den INTERBUS mit den zeitlichen Phasen für die Einstellung der Datenrate dargestellt. In der ersten Phase "Reset" **41** sind aufgrund einer protokollspezifischen Pause alle Komponenten in den Anfangszustand versetzt. In der zeitlichen Phase der Datenraten-Einstellung **42** werden von der Zentralstation Telegramme ausgesendet, welche eine festgelegte Anzahl von Bits enthalten, wobei nur die signifikanten Bits zur Datenraten-Erkennung ausgewertet werden. Nach Ablauf der zeitlichen Phase der Datenraten-Einstellung **42,** folgt die Phase "Umschalten auf Protokollkern" **43,** in der die interne Datenleitung aus der bypassartigen Umleitung um den Protokollkern nunmehr zum Protokollkern umgeschaltet wird. Zum späteren Zeitpunkt **44** der Protokollkern aktiviert. Danach kann die Datenübertragung nach dem vorgesehenem Protokoll beginnen. Dies ist die Phase der Datenübertragung **45.**

**FIG. 4** zeigt in zeitlicher Darstellung die Telegrammaktivität beispielhaft am Daten-Eingang **22** des Rücksetzsignals **20** für den Protokollkern und die funktionale Schalterstellung des Datenleitungs-Ausgangs-Umschalters **37** während der einzelnen beschriebenen zeitlichen Phasen. Die Telegrammaktivität passiert auch auf den Busleitungen der anderen Segmente **6, 7, 8.**

In **FIG. 5** sind die Telegramme skizziert, wie sie zur Einstellung der Datenrate in einem Anschaltmodul verwendet werden können. In der zeitlichen Phase der Datenraten-Einstellung sendet die Zentralstation wiederholt mehrmals die Datenraten-Einstellungstelegramme **53** über die Busleitung **5** an alle Teilnehmer aus. Ein Datenraten-Einstellungstelegramm besteht aus einer signifikanten Bitfolge **51** mit anschließender bestimmter Bitpause **52.** Da diese Folge der Datenraten-Einstellungstelegramme sich mehrmals in gleicher Weise wiederholt, kann nur der für die relevante Datenrate vorgesehene Datenraten-Detektor die Datenrate erkennen.

Die anderen Datenraten-Detektoren sind ebenfalls aktiv, da jedoch das empfangene Datenraten-Einstellungstelegramm nicht dem erwarteten zeitliche Bitmuster übereinstimmt, erkennen diese keine Datenrate.

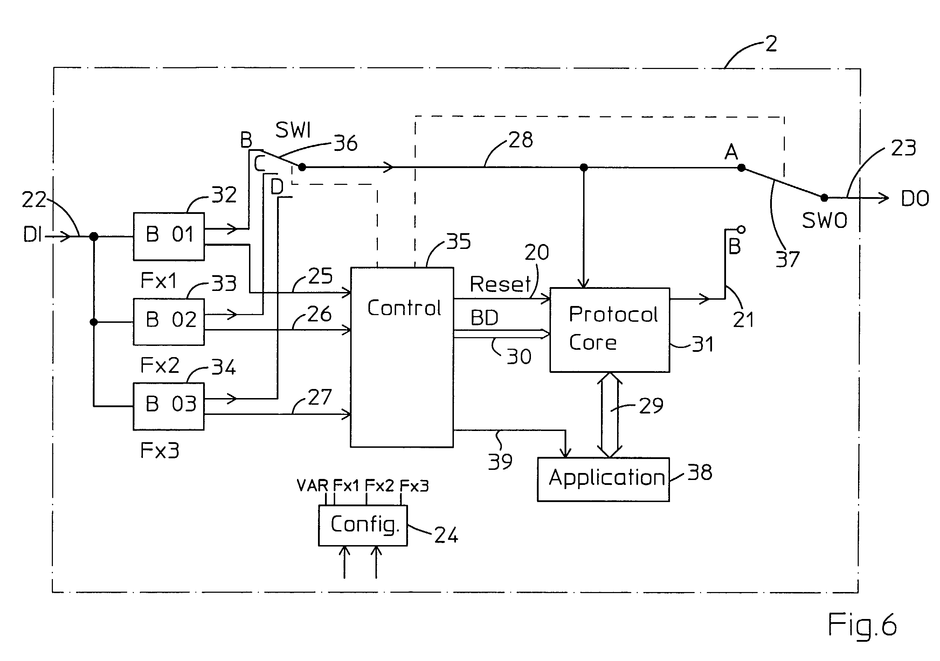

**FIG. 6** zeigt die notwendigen funktionalen Einrichtungen innerhalb eines Teilnehmers **2** in einer Ausführungsform, bei welcher im Teilnehmer **3** die Datenrate fest voreingestellt werden kann. Der Dekoder **24** für eine fest einstellbare Datenrate wählt nur einen einzigen Datenraten-Detektor aus den möglichen drei Datenraten-Detektoren **32, 33, 34** aus. Nach Erkennung der ausgewählten Datenrate BD1, BD2 oder BD3, leitet der jeweils ausgewählte Datenraten-Detektor die folgend empfangenen Datenraten-Einstellungstelegramme über die interne Datenleitung **28** und setzt den Datenleitung-Ausgangs-Umschalter auf den Daten-Ausgang **23.** Die Funktion des Datenraten-Controllers **35,** des Protokollkerns **31** und der Applikationsschnittstelle **38** läuft in gleicher Weise ab, wie sie in der Beschreibung zu FIG. 2 aufgeführt wurde. Die Datenraten-Einstellung muß dabei von der Zentralstation derart gesteuert werden, daß diese beginnend mit der ersten Datenrate die Phase der Datenrateneinstellung **42** so oft wiederholt, bis sie über den Datenrückweg der Busleitung, **13** die ausgesendeten Datenraten-Einstellungstelegramme empfangen und erkannt werden. Danach wiederholt die Zentraleinheit die Phase "Reset" **41** und die Phase "Datenraten-Einstellung" **42,** jedoch mit der vorher erkannten Datenrate. Auf diese Weise kann in einem einzigen Teilnehmer die Datenrate für die gesamte Datenübertragungsanlage eingestellt werden.

## Patentansprüche

1. Verfahren zur zentralen Datenraten-Einstellung in einer Datenübertragungsanlage mit einer Zentralstation (1) und mindestens einem am Feldbus angeschlossenem Teilnehmer (3, 4, 5), welche einen Protokollkern (31) und eine oder mehrere Vorrichtungen zur Datenraten-Einstellung (32, 33, 34, 35) enthält,
**dadurch gekennzeichnet,**
**dass** die Vorrichtungen zur Datenraten-Einstellung die Datenraten-Einstellungstelegramme (53) empfangen und auswerten und bei Erkennung der Datenrate des empfangenen Datenraten-Einstellungstelegramms (53) aus einer Mehrzahl von möglichen Datenraten die Datenrate im Protokollkern (31) eingestellt wird.

2. Verfahren nach Anspruch 1,
**dadurch gekennzeichnet,**
**dass** die Datenraten-Einstellung in einem dafür vorgesehenen Zeitraum erfolgt.

3. Verfahren nach Anspruch 1 bis 2,
**dadurch gekennzeichnet,**
**dass** in der Phase der Datenraten-Einstellung (42) der Protokollkern (31) inaktiviert ist.

4. Verfahren nach einem der Ansprüche 1 bis 3,
**dadurch gekennzeichnet,**
**dass** in der Phase der Datenraten-Einstellung (42) intern im Teilnehmer (3, 4, 5) die logischen Schalter (36, 37) die interne Datenleitung (28) so schalten, dass der Protokollkern (31) bypassartig überbrückt wird.

5. Verfahren nach einem der Ansprüche 1 bis 4,
**dadurch gekennzeichnet,**
**dass** in der Phase der Datenraten-Einstellung (42) die in einem Teilnehmer (2) am Dateneingang (22) empfangenen Datenraten-Einstellungstelegramme (53) an den Datenausgang zum Dateneingang (22) des jeweils dahinter angeordneten Teilnehmers (3) weitergereicht werden.

6. Verfahren nach einem der Ansprüche 1 bis 5,
**dadurch gekennzeichnet,**
**dass** die Datenraten-Einstellungstelegramme (53) für jede Datenrate jeweils den gleichen Inhalt aufweisen.

7. Verfahren nach einem der Ansprüche 1 bis 6,
**dadurch gekennzeichnet,**
**dass** zur Erkennung der Datenrate aus den Datenraten-Einstellungstelegrammen (53) eine geringere Anzahl von Bits mit bekanntem Zustand herangezogen werden.

8. Verfahren nach einem der Ansprüche 1 bis 7,
**dadurch gekennzeichnet,**
**dass** die Bitfolge der Datenraten-Einstellungstelegramme für eine andere Funktionen in der Datenübertragungsanlage verwendet wird.

9. Verfahren nach einem der Ansprüche 1 bis 8,
**dadurch gekennzeichnet,**
**dass** die Datenrate an einem Teilnehmer (2, 3, 4) fest eingestellt werden kann und die Zentralstation (1) und alle anderen Teilnehmer (2, 3, 4) sich auf diese Datenrate einstellen.

10. Vorrichtung zur zentralen Datenraten-Einstellung in einer Datenübertragungsanlage mit einer Zentralstation (1) und mindestens einem am Feldbus angeschlossenem Teilnehmer (3, 4, 5), welche einen Protokollkern (31) und eine oder mehrere Vorrichtungen zur Datenraten-Einstellung (32, 33, 34, 35) enthält,
**dadurch gekennzeichnet,**
**dass** in jedem Teilnehmer (3, 4, 5) für jede Datenrate jeweils ein Datenraten-Detektor (32, 33, 34) vorgesehen ist, welche gleichzeitig die Datenraten-Einstellungstelegramme (53) empfangen und auswerten bei Erkennung eines erwarteten signifikanten Bitmusters aus einer Mehrzahl von möglichen Datenraten die Datenrate im Protokollkern (31) eingestellt wird.

11. Vorrichtung nach Anspruch 10,
**dadurch gekennzeichnet,**
**dass** in der Phase der Datenraten-Einstellung (42) der Protokollkern (31) inaktiviert ist.

12. Vorrichtung nach Anspruch 10 oder 11,
**dadurch gekennzeichnet,**
**dass** in der Phase der Datenraten-Einstellung (42) die internen logischen Schalter (36, 37) die empfangenen Datenraten-Einstellungstelegramme an den Ausgang (23) weiterleiten.

13. Vorrichtung nach einem der Ansprüche 10 bis 12,
**dadurch gekennzeichnet,**
**dass** in der Phase der Datenraten-Einstellung (42) die internen logischen Schalter (36, 37) die empfangenen Datenraten-Einstellungstelegramme an den Ausgang (23) weiterleiten.

14. Vorrichtung nach einem der Ansprüche 10 bis 13,
**dadurch gekennzeichnet,**
**dass** die Datenraten-Einstellungstelegramme (53) zusätzliche für eine andere Funktion in der Datenübertragungsanlage verwendet werden.

15. Vorrichtung nach einem der Ansprüche 10 bis 14,
**dadurch gekennzeichnet,**
**dass** in einem der Teilnehmer (2, 3, 4) die Datenrate durch Vorauswahl des Datenraten-Detektors (32, 33, 34) fest eingestellt wird, wodurch in der Phase der Datenrateneinstellung (42) nur Datenraten-Einstellungstelegramme der fest eingestellten Datenrate über den Ausgang (23) zum nächsten Teilnehmer (3, 4) weitergeleitet werden.
